# EUROPEAN PATENT SPECIFICATION

(11) **EP 0 905 443 B1**
(45) Date of publication and mention of the grant of the patent: **01.12.2004**
(21) Application number: 98307983.1
(22) Date of filing: 30.09.1998
(51) Int. Cl.: F23C 7/00, F23D 17/00

(54) **Dual-fuel nozzle for inhibiting carbon deposition onto combustor surfaces in a gas turbine**
Zweistoffdüse zur Verhinderung der kohlenstoffhaltigen Ablagerung auf Oberflächen einer Gasturbinenbrennkammer
Buse à deux combustibles pour empêcher les dépôts carbonés sur les surfaces dans une chambre de combustion d'une turbine à gaz

(30) Priority: 30.09.1997 US 941240
(43) Date of publication of application: 31.03.1999
(73) Proprietor: GENERAL ELECTRIC COMPANY, Schenectady, NY 12345 (US)
(72) Inventor: Loprinzo, Anthony J., Greer South Carolina 29650 (US); Maughan, James Rollins, Scotia, New York 12302 (US); Morton, H. Lindsay, Simpsonville, South Carolina 29681 (US); Black, Stephen Hugh, Duanesburg, New York 12053 (US); Dean, Anthony John, Scotia, New York 12302 (US); Bechtel, William Theodore, II, Scotia, New York 12302 (US); Luts, Andrew, Escondido, California 92027 (US)
(74) Representative: Goode, Ian Roy

(56) References cited:
- EP-A- 0 455 459
- US-A- 3 853 273
- US-A- 4 198 815
- US-A- 4 407 128
- US-A- 4 609 150
- US-A- 4 693 074
- US-A- 5 288 021
- US-A- 5 615 555

## Description

The present invention relates to dual-fuel nozzles for gas turbine combustors that bum liquid fuel at temperatures and pressures conducive to fuel cracking and subsequent solid carbon resin formation on combustor fuel injection hardware that is exposed to liquid fuel prior to evaporation and combustion and particularly relates to a dual-fuel nozzle which inhibits the deposition of carbon on gas fuel-air supply surfaces when operating in a liquid fuel combustion mode.

In dual-fuel combustion systems for gas turbines, gaseous and liquid fuel are used separately to fire the gas turbine. For a number of reasons, including the goal of dry low Noₓ operations, developmental emphasis has been on the efficient use of gas fuel nozzles and the liquid fuel nozzle is typically used only as a backup and only sporadically. However, it has been demonstrated recently that the use of liquid fuel in the gas turbine combustor in lieu of gaseous fuel has a tendency to deposit carbon residue on various passages of the gas/air fuel nozzle which may inhibit return to gas fuel turbine operation.

More particularly, catastrophic combustor failure has resulted from the rapid build-up of carbon deposits in the vicinity of the liquid fuel injection. Carbon deposits developed during liquid fuel operation tend to block off the intended gas or liquid fuel inlet to the combustor liner, causing a backflow of fuel. This results in ignition and flame holding external to the combustor liner, which in turn results in thermal failure. Because the failure does not result in loss of flame and may not result in significant exhaust temperature changes prior to breaching the combustion pressure vessel, these failures can become non-contained prior to control system detection. Serious safety concerns have thus been generated and load restrictions have been required to limit operation of the turbine and hence combustors in load ranges where deposition rates are known to be significant. For example, some failures have been reported following less than 12 hours of operation at adverse high carbon formation rate conditions.

Various efforts to eliminate or accommodate the carbon deposition problem have been proposed. For example, aerodynamic sweeping of surfaces anticipated to experience liquid fuel impingement has been demonstrated to be effective where there is sufficient combustor line pressure drop to create enough air sweep velocity to inhibit deposition. Combustor surface metal temperatures in excess, for example, of 426,66°C (800°F), may also prevent carbon formation. Both of these systems, however, have their respective drawbacks, including substantial usage of inlet air which could be more advantageously used elsewhere, as well as metal cooling problems. Consequently, there has been a demonstrated need to provide a dual-fuel nozzle system of fuel spray distribution and combustor aerodynamic characteristics that minimize or prevent initiation of carbon deposition on air, liquid fuel and gaseous fuel nozzle surfaces. One such dual-fuel nozzle system is disclosed in U.S. patent No. 5,833,141 (Attorney Docket No. 839-437), filed May 30, 1997, of common assignee herewith. The present disclosure constitutes an improvement upon and a variation of the system disclosed in that prior patent Related nozzles are disclosed in US 5,288,021 A and EP 0 455 459 A.

In accordance with the present invention, a dual-fuel nozzle is provided having a gaseous/liquid fuel nozzle comprising a gaseous nozzle surrounding a central axially disposed liquid fuel nozzle terminating in a tip. In a liquid fuel operating mode, atomizing air and liquid-fuel are combined and injected in a generally conical liquid fuel droplet spray pattern downstream of the liquid fuel nozzle tip toward the flame stabilization zone. A convergent sleeve of the dual-fuel nozzle surrounds at least a downstream portion of the gaseous/liquid fuel nozzle. Inlet air, for example, from the compressor, flows through an upstream portion of the converging flow passage or duct defined by the sleeve about the gaseous/liquid nozzle for flow downstream past a throat area of the sleeve and about the emerging liquid fuel spray cone during liquid fuel combustor operation. Gaseous fuel is supplied through a series of circumferentially spaced apertures into the converging air flow passage or duct.

A first, or inside swirler is located in the upstream portion of the air flow passage or duct for swirling air flowing through the duct and providing a swirling air pattern at the downstream throat of the sleeve. Additionally, outside of the downstream portion of the sleeve is an outside or second swirler for swirling inlet air from the compressor and providing swirling air downstream of the liquid nozzle tip and about the swirling air exiting the throat of the sleeve. Thus, the sleeve forms a boundary between the air flows, i.e., a convergent air flow through the inner swirler and duct bounded by the central gaseous and liquid fuel nozzles and an air flow outside the sleeve and passing through the outer swirler. The duct thus separates and conditions the air flow between the swirlers. The exit plane of the inner swirler is located preferably axially forwardly, i.e., upstream of the liquid fuel injection plane and discharges into the converging annulus defined by the gaseous/liquid fuel nozzle and the convergent sleeve. Thus, air flows through the duct and is continuously accelerated in the duct to the duct exit, i.e., the downstream end of the sleeve. This prevents recirculation zones that could entrain liquid fuel in the duct and form carbon deposits. A convergence ratio of at least 5% is provided the duct, i.e., the downstream area adjacent the duct exit should be greater than 5% less the upstream area. The aerodynamic throat exit at the end of the sleeve also provides a strong barrier to flashback into the sleeve during gas fuel operations.

The second or outer swirler forms another aerodynamic barrier to liquid fuel droplets being deposited on metal surfaces of the dual-fuel nozzle as the liquid fuel evaporates in the exit swirl. The pressure drop through the second swirler also prevents the liquid fuel from contacting the surfaces of the sleeve. Further the aerodynamics of the swirlers create a recirculation along the centerline of the liquid fuel passage for effective ignition and flame stability downstream of the nozzles.

In the present invention, there is provided a dual-fuel nozzle for a gas turbine combustor, comprising a gaseous/liquid fuel nozzle defining an axis and including a liquid fuel nozzle terminating in a liquid fuel tip for injecting liquid fuel in a spray pattern toward a flame zone downstream of the nozzle, means surrounding at least a portion of the gaseous/liquid fuel nozzle and in part defining a generally axially extending air flow passage convergent in a downstream direction toward the axis, the flow passage defining means terminating in an axial plane no further upstream than the liquid fuel tip, the airflow passage being partially formed between the flow passage defining means and exterior walls of the liquid fuel nozzle, the gaseous/liquid fuel nozzle including actuel gas nozzle comprised of a tubular member between the flow passage defining means and the liquid fuel nozzle, defining an annular passageway about the liquid fuel nozzle and a plurality of apertures in the tubular member spaced upstream from the liquid fuel tip and opening through the tubular member which is adapted to flow fuel gas into the convergent flow passage, a first air swirler upstream of the fuel tip for swirling air introduced into the air flow passage and delivering the swirling air about the liquid fuel spray pattern and a second air swirler about the flow passage defining means and disposed axially downstream of the first air swirler for swirling air received externally about the flow passage defining means and flowing swirled air about the liquid fuel spray pattern, whereby impingement of liquid fuel onto the gaseous/liquid fuel nozzle is substantially avoided.

Accordingly, it is a primary object of the present invention to provide a dual-fuel nozzle for a gas turbine combustor which prevents initiation of carbon deposition on the air, gaseous fuel and liquid fuel nozzle surfaces by eliminating impingement of liquid fuel on the combustor metal surfaces over the entire gas turbine operating range.

An embodiment of the invention will now be described, by way of example, with reference to the accompanying drawings, in which:-
FIGURE 1 is a fragmentary cross-sectional view of a dual-fuel nozzle constructed in accordance with the present invention;

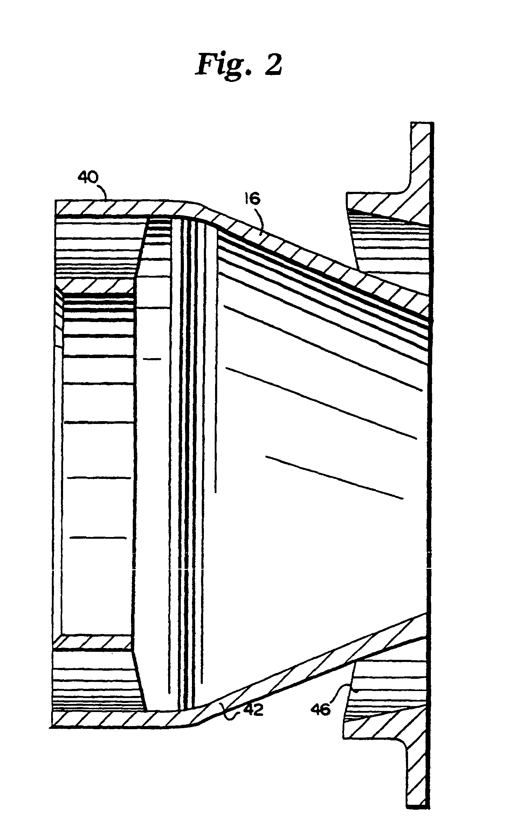

FIGURE 2 is an enlarged cross-sectional view of a sleeve and a pair of swirlers forming part of the dual-fuel nozzle of Figure 1 ; and

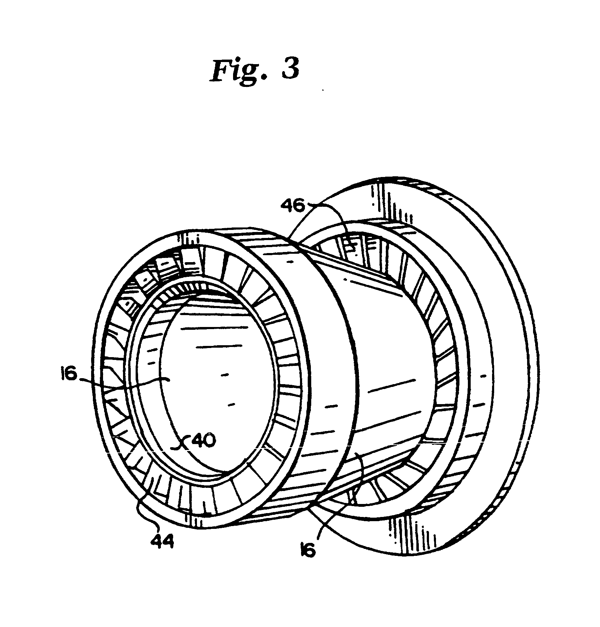

FIGURE 3 is a perspective view of the sleeve and nozzles illustrated in Figure 2.

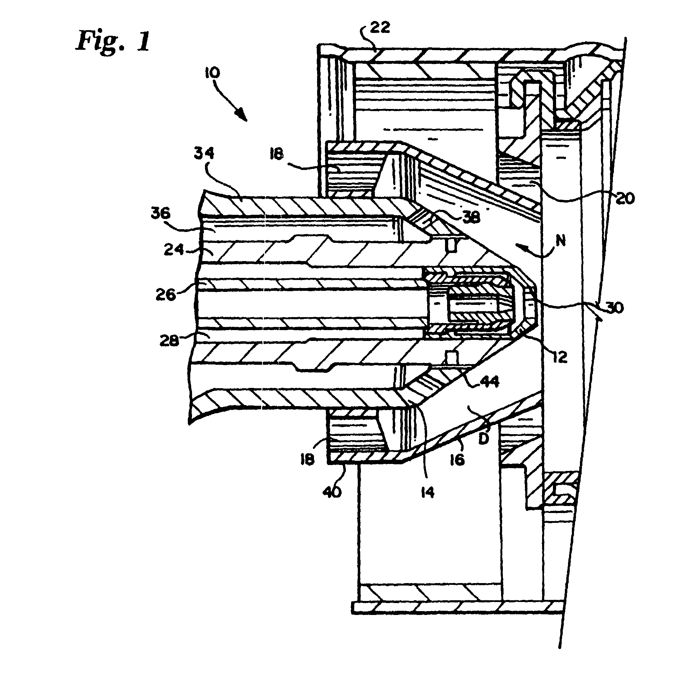

Referring to Figure 1, a dual-fuel nozzle according to the present invention and generally designated 10, includes a gaseous/liquid fuel nozzle, generally designated N, comprising a liquid fuel nozzie 12 and a gas fuel nozzle 14 forming part of an integrated structure within a flow passage defining means, such as sleeve 16. Sleeve 16 carries first or inner swirlers 18 and second or outer swirlers 20 within a combustor housing 22. The liquid fuel nozzle 12 and gaseous fuel nozzle 14 are *per* *se* conventional. The liquid, e.g., oil, fuel nozzle includes intermediate and inner concentric tubes 24 and 26, respectively, defining an annular passage 28 therebetween for flowing atomizing air through apertures in the tip 30 of the liquid fuel nozzle 12. The inner tube 26 defines a central axial passageway for delivering liquid fuel to the liquid fuel nozzle tip 30. Surrounding the intermediate tube 20 is an outer tubular member or tube 34 which defines an annular passageway 36 for flowing gas fuel through apertures 38 into a duct or air flow passage D, described below. While the major portion of the operation of the combustor is in a gaseous fuel mode, it has been found that liquid or oil droplets from the conical spray pattern of the liquid or oil emerging from the liquid fuel nozzle tip 30 impinge on various metal surfaces of the fuel nozzle outlets and ancillary structures forming a deleterious carbon deposition capable of blocking off fuel flow, causing a backflow of fuel and consequent potential thermal failure as outlined above. Consequently, there has been a need to eliminate the deposition of carbon on the dual-fuel nozzle to avoid thermal failure and also to ensure that the flame does not stabilize inside any air/gas passageways, to promote further fuel/air mixing and to ensure efficient dependable operation of the dual-fuel nozzle over a long period of time.

To accomplish the foregoing, the present invention provides a sleeve generally coaxial with and hence generally concentric about the gaseous/liquid fuel nozzle N. Particularly, the flow passage defining means, such as sleeve 16, preferably has a first upstream annular section 40 spaced from the outer wall 34 of the nozzle N and a converging section 42, likewise spaced from the converging walls 44 of the nozzle N. As will be appreciated, the sleeve 16 forms an annular air flow passage or duct D between it and the exterior walls of the gas and liquid nozzle for flowing air, for example, from a compressor, not shown, convergent toward the axis of the nozzle N in a downstream direction. More particularly, the sleeve 16 converges about the converging outer walls 44 of the nozzle N to provide a reduced cross-sectional area in a downstream direction. This reduced cross-sectional configuration accelerates the flow of air through the passage. While drawing Figure 1 illustrates a divergence of the sleeve 16 and the walls 44 of the nozzle N relative to one another in a downstream direction, the net reduction in cross-sectional area in the duct in the downstream direction accelerates the air flow through the duct D. Preferably, the cross-sectional area of the duct has a convergence ratio of at least 5%, i.e., the downstream area should be 5% or more less than the upstream area. It will be appreciated that the duct D may be formed otherwise than as a sleeve, e.g., as an integral part of the combustor housing.

As illustrated in the drawing figures, the upstream end of the sleeve 16, i.e., the annular section 40, carries an inner swirler 18 formed of a plurality of vanes 44 designed to impart rotation to the air flowing through the vanes and through the duct between sleeve 16 and walls 44. Additionally, at the downstream end of sleeve 16, there is provided an outer or second swirler 20, likewise having a plurality of vanes 46 for swirling air flowing externally about sleeve 16 in the downstream direction. The vanes 44 and 46 of the inner and outer swirlers 18 and 20, respectively, may provide rotation of the air in the same direction or in opposite directions.

From a review of Figure 1, it will be appreciated that the inner swirler 18 is located forwardly, i.e., upstream of the liquid fuel nozzle tip 30 and the gaseous fuel openings 38. The sleeve 16 terminates at its downstream end in a plane preferably downstream of the tip 30 of the liquid fuel nozzle but may terminate in axial coincidence with the liquid fuel nozzle tip 30.

It will be appreciated that the swirlers 18 and 20 create a strong recirculation zone for flame stabilization downstream of the swirlers and downstream of the liquid fuel nozzle tip 30. Sleeve 16 forms a boundary between the swirler flows extending from the shroud of the inner swirler to the hub of the outer swirler. The duct thus formed separates and conditions the flow, i.e., by converging and accelerating the air flow in the downstream direction to prevent separation of air flow from the walls of the duct. Thus, the converging and accelerating air flow through the duct is directed downstream and radially inwardly toward the axis of the conical oil spray distribution pattern emerging from the liquid fuel tip 30 when in a liquid fuel mode of operation. This acceleration and convergence in the duct helps to prevent recirculation zones that could otherwise entrain liquid fuel into the duct and form carbon deposits on the metal surfaces. The aerodynamic throat at the exit of the duct provides a strong barrier to flashback in the duct. That is, the convergence of the sleeve and acceleration of the air flow prevents flame ignition in the converging duct. The flame cannot be held in the duct. Stated differently, flame stabilization is forced to occur downstream of the exit plane of the sleeve 16. It will also be appreciated that the pressure drop across the outer swirler 20 prevents liquid fuel droplet contact with the surfaces of the outer swirler 20. Generally, the air flow caused by the swirlers, whether co-rotating or rotating in opposite directions create a recirculation zone along the axis of the nozzle 12 for excellent ignition and flame stability downstream of the nozzle. Also, absent an outer swirler, the metal in that region otherwise available but for the swirler would necessarily have to be cooled, thus increasing the likelihood of carbon deposition on the metal surfaces surrounding the liquid fuel nozzle.

## Claims

1. A dual-fuel nozzle (10) for a gas turbine combustor for substantially avoiding impingement of liquid fuel onto the dual-fuel nozzle, the dual-fuel nozzle comprising:
a gaseous/liquid fuel nozzle (N) defining an axis and including a liquid fuel nozzle (12) terminating in a liquid fuel tip (30) for injecting liquid fuel in a spray pattern toward a flame zone downstream of said nozzle;
means (16) surrounding at least a portion of said gaseous/liquid fuel nozzle and in part defining a generally axially extending air flow passage (D) convergent in a downstream direction toward said axis, said flow passage defining means (16) terminating in an axial plane no further upstream than said liquid fuel tip; (30) said airflow passage (D) being partially formed between said means (16) and exterior walls of said liquid fuel nozzle (12);
said gaseous/liquid fuel nozzle including a fuel gas nozzle (14) comprised of a tubular member (34), between said flow passage defining means and said liquid fuel nozzle, defining an annular passageway (36) about said liquid fuel nozzle and a plurality of apertures (38) in said tubular member spaced upstream from said liquid fuel tip and opening through said tubular member which is adapted to flow fuel gas into said convergent flow passage;
a first air swirler (18) upstream of said fuel tip adapted to swirl air introduced into said air flow passage and deliver the swirling air about said liquid fuel spray pattern; and
a second air swirler (20) about said flow passage defining means and disposed axially downstream of said first air swirler adapted to swirl air received externally about said flow passage defining means and adapted to flow swirled air about said liquid fuel spray pattern.

2. A nozzle according to Claim 1 wherein said flow passage defining means comprises a sleeve (16), said axial flow passage (D) decreasing in cross-sectional area in a downstream direction to accelerate air flow through said passage.

3. A nozzle according to Claim 1 or Claim 2 wherein said flow passage defining means terminates in an axial plane downstream of said liquid fuel tip.

4. A nozzle according to Claim 1 or Claim 2 wherein said flow passage defining means has a greater upstream cross-sectional area than a downstream cross-sectional area to preclude flow separation from walls defining said flow passage and to accelerate the flow of air therethrough in a downstream direction.

5. A nozzle according to Claim 1 or Claim 2 wherein said first and second swirlers generate air flows swirling in the same direction.

6. A nozzle according to Claim 1 or Claim 2 wherein said first and second swirlers generate air flow swirling in opposite directions.

7. A nozzle according to Claim 1 or Claim 2 wherein the second swirler has a pressure drop thereacross to preclude liquid fuel contact with said second swirler.

8. A nozzle according to Claim 1 or Claim 2 wherein said flow passage defining means terminates in an axial plane downstream of said liquid fuel tip, said first and second swirlers generating air flows swirling in the same direction.

9. A nozzle according to Claim 1 or Claim 2 wherein said flow passage defining means terminates in an axial plane downstream of said liquid fuel tip, said first and second swirlers generating air flow swirling in opposite directions.

10. A nozzle according to Claims 1 or 2 wherein the first air swirler is spaced from the second air swirler along the axial plane.

11. A nozzle according to Claims 1 or 2 wherein the convergent air flow passage comprises a general conical shape for converging and accelerating air flow.

## Patentansprüche

1. Zweibrennstoffdüse (10) für einen Gasturbinenbrenner zum im wesentlichen Verhindern eines Aufpralls von flüssigem Brennstoff auf die Zweibrennstoffdüse, wobei die Zweibrennstoffdüse enthält:
eine Gas/Flüssigkeit-Brennstoffdüse (N), die eine Achse bildet und eine Flüssigkeit-Brennstoffdüse (12) aufweist, die in einer Flüssigkeit-Brennstoffspitze (30) mündet zum Einspritzen von flüssigem Brennstoff in einem Sprühmuster in Richtung auf eine Zone stromabwärts von der Düse,
eine Vorrichtung (16), die wenigstens einen Teil von der Gas/Flüssigkeit-Brennstoffdüse umgibt und teilweise einen im allgemeinen axial verlaufenden Luftströmungskanal (D) bildet, der in einer stromabwärtigen Richtung zur Achse konvergiert,
wobei die den Strömungskanal bildende Vorrichtung (16) in einer axialen Ebene endet, die nicht weiter stromaufwärts ist als die Flüssigkeit-Brennstoffspitze (30), wobei der Luftströmungskanal (D) teilweise zwischen der Vorrichtung (16) und den äusseren Wänden der Flüssigkeit-Brennstoffdüse (12) gebildet ist,
wobei die Gas/Flüssigkeit-Brennstoffdüse eine Brennstoffgasdüse (14), die von einem rohrförmigen Teil (34) gebildet ist, zwischen der den Strömungskanal bildenden Vorrichtung und der Flüssigbrennstoffdüse aufweist und einen Ringkanal (36) um die Flüssigbrennstoffdüse herum und mehrere Öffnungen (38) in dem rohrförmigen Teil im Abstand stromaufwärts von der Flüssigbrennstoffspitze aufweist und sich durch das rohrförmige Teil öffnet, das in der Lage ist, Brennstoffgas in den konvergenten Strömungskanal zu leiten,
einen ersten Luftverwirbler (18) stromaufwärts von der Brennstoffspitze, der in der Lage ist, in den Luftströmungskanal eingeleitete Luft zu verwirbeln und die wirbelnde Luft um das Flüssigbrennstoff-Sprühmuster herum zu liefern, und
einen zweiten Luftverwirbler (20), der um die den Strömungskanal bildende Vorrichtung herum und axial stromabwärts von dem ersten Luftverwirbler angeordnet ist und in der Lage ist, Luft zu verwirbeln, die aussen um die den Strömungskanal bildende Vorrichtung herum aufgenommen ist, und die in der Lage ist, verwirbelte Luft um das Flüssigbrennstoff-Sprühmuster herum zu leiten.

2. Düse nach Anspruch 1, wobei die den Strömungskanal bildende Vorrichtung eine Hülse (16) aufweist, wobei der axiale Strömungskanal (D) in der Querschnittsfläche in stromabwärtiger Richtung abnimmt, um die Luftströmung durch den Kanal zu beschleunigen.

3. Düse nach Anspruch 1 oder Anspruch 2, wobei die den Strömungskanal bildende Vorrichtung in einer axialen Ebene stromabwärts von der Flüssigbrennstoffspitze endet.

4. Düse nach Anspruch 1 oder Anspruch 2, wobei die den Strömungskanal bildende Vorrichtung eine grössere stromaufwärtige Querschnittsfläche als eine stromabwärtige Querschnittsfläche hat, um eine Strömungsablösung von Wänden der den Strömungskanal bildenden Vorrichtung zu verhindern und die Strömung von in stromabwärtiger Richtung hindurchtretender Luft zu beschleunigen.

5. Düse nach Anspruch 1 oder Anspruch 2, wobei die ersten und zweiten Verwirbler Luftströmungen erzeugen, die in der gleichen Richtung wirbeln.

6. Düse nach Anspruch 1 oder Anspruch 2, wobei die ersten und zweiten Verwirbler Luftströmungen erzeugen, die in entgegengesetzten Richtungen wirbeln.

7. Düse nach Anspruch 1 oder Anspruch 2, wobei der zweite Verwirbler einen Druckabfall über sich hat, um einen Flüssigbrennstoffkontakt mit dem zweiten Verwirbler zu verhindern.

8. Düse nach Anspruch 1 oder Anspruch 2, wobei die den Strömungskanal bildende Vorrichtung in einer axialen Ebene stromabwärts von der Flüssigbrennstoffspitze endet und die ersten und zweiten Verwirbler Luftströmungen erzeugen, die in der gleichen Richtung wirbeln.

9. Düse nach Anspruch 1 oder Anspruch 2, wobei die den Strömungskanal bildende Vorrichtung in einer axialen Ebene stromabwärts von der Flüssigbrennstoffspitze endet und die ersten und zweiten Verwirbler Luftströmungen erzeugen, die in entgegengesetzten Richtungen wirbeln.

10. Düse nach Anspruch 1 oder Anspruch 2, wobei der erste Luftverwirbler entlang der axialen Ebene im Abstand von dem zweiten Verwirbler angeordnet ist

11. Düse nach Anspruch 1 oder Anspruch 2, wobei der konvergente Luftströmungskanal eine im allgemeinen konische Form hat zum Konvergieren und Beschleunigen der Luftströmung.

## Revendications

1. Buse (10) à deux combustibles pour chambre de combustion de turbine à gaz, servant à empêcher sensiblement un combustible liquide de frapper la buse à deux combustibles, la buse à deux combustibles comprenant :
une buse (N) de combustibles gazeux/liquide définissant un axe et comportant un injecteur (12) de combustible liquide se terminant par un embout (30) pour combustible liquide servant à injecter un combustible liquide suivant une configuration de pulvérisation vers une zone de flamme en aval de ladite buse ;
un moyen (16) entourant au moins une partie de ladite buse de combustibles gazeux/liquide et définissant partiellement un passage globalement axial (D) d'écoulement d'air, convergeant vers l'aval en direction dudit axe, ledit passage d'écoulement définissant un moyen (16) aboutissant à un plan axial non situé plus en amont que ledit embout (30) pour combustible liquide ; ledit passage d'écoulement d'air (D) étant partiellement formé entre ledit moyen (16) et des parois extérieures dudit injecteur (12) de combustible liquide ;
ladite buse de combustibles gazeux/liquide comportant un injecteur (14) de combustible gazeux constitué par un élément tubulaire (34), entre ledit moyen définissant le passage d'écoulement et ledit injecteur de combustible liquide, définissant un passage annulaire (36) autour dudit injecteur de combustible liquide et une pluralité d'orifices (38) dans ledit élément tubulaire espacés en amont par rapport audit embout pour combustible liquide et débouchant à travers ledit élément tubulaire qui est conçu pour faire entrer le combustible gazeux dans ledit passage d'écoulement convergeant;
un premier brasseur (18) d'air en amont dudit embout pour combustible conçu pour faire tourbillonner l'air introduit dans ledit passage d'écoulement d'air et faire venir l'air tourbillonnant autour de ladite configuration de pulvérisation de combustible liquide ; et
un deuxième brasseur (20) d'air autour dudit moyen définissant le passage d'écoulement et disposé de manière axiale en aval dudit premier brasseur d'air, conçu pour faire tourbillonner l'air reçu extérieurement autour dudit moyen définissant le passage d'écoulement et conçu pour faire passer l'air tourbillonnant autour de ladite configuration de pulvérisation de combustible liquide.

2. Buse selon la revendication 1, dans laquelle ledit moyen définissant le passage d'écoulement comporte un manchon (16), ledit passage d'écoulement axial (D) ayant une section transversale qui diminue vers l'aval pour provoquer une accélération de l'écoulement de l'air dans ledit passage.

3. Buse selon la revendication 1 ou la revendication 2, dans laquelle ledit moyen définissant le passage d'écoulement aboutit à un plan axial en aval dudit embout pour combustible liquide.

4. Buse selon la revendication 1 ou la revendication 2, dans laquelle ledit moyen définissant le passage d'écoulement a une section transversale amont plus grande qu'une section transversale aval pour empêcher le flux de se séparer de parois définissant ledit passage d'écoulement et pour provoquer une accélération d'écoulement de l'air dans celui-ci vers l'aval.

5. Buse selon la revendication 1 ou la revendication 2, dans laquelle lesdits premier et deuxième brasseurs créent des flux d'air tourbillonnant dans le même sens.

6. Buse selon la revendication 1 ou la revendication 2, dans laquelle lesdits premier et deuxième brasseurs créent des flux d'air tourbillonnant dans des sens opposés.

7. Buse selon la revendication 1 ou la revendication 2, dans laquelle une chute de pression se produit dans la traversée du deuxième brasseur pour empêcher le combustible liquide de venir au contact dudit deuxième brasseur.

8. Buse selon la revendication 1 ou la revendication 2, dans laquelle ledit moyen définissant le passage d'écoulement aboutit à un plan axial en aval dudit embout pour combustible liquide, lesdits premier et deuxième brasseurs créant des flux d'air qui tourbillonnent dans le même sens.

9. Buse selon la revendication 1 ou la revendication 2, dans laquelle ledit moyen définissant le passage d'écoulement aboutit à un plan axial en aval dudit embout pour combustible liquide, lesdits premier et deuxième brasseurs créant des flux d'air tourbillonnant dans des sens opposés.

10. Buse selon la revendication 1 ou 2, dans laquelle le premier brasseur d'air est espacé du deuxième brasseur d'air dans le plan axial.

11. Buse selon la revendication 1 ou 2, dans laquelle le passage d'écoulement convergeant d'air présente une forme générale conique pour provoquer une convergence et une accélération du flux d'air.
